Europäisches Patentamt

European Patent Office

Office européen des brevets

(11) Veröffentlichungsnummer: **0 369 159**
**A2**

## (12) EUROPÄISCHE PATENTANMELDUNG

(21) Anmeldenummer: **89118759.3**

(51) Int. Cl.⁵: **H04N 7/00**

(22) Anmeldetag: **10.10.89**

(30) Priorität: **15.11.88 DE 3838685**

(43) Veröffentlichungstag der Anmeldung:
**23.05.90 Patentblatt 90/21**

(84) Benannte Vertragsstaaten:
**AT BE CH DE ES FR GB IT LI LU NL SE**

(71) Anmelder: **ANT Nachrichtentechnik GmbH**
**Gerberstrasse 33**
**D-7150 Backnang(DE)**

(72) Erfinder: **Drinda, Klaus-Jürgen, Dipl.-Ing.**
**Tannenweg 12**
**D-7150 Backnang(DE)**

(54) Verfahren zum Wiedergewinnen von Binärinformationen aus einem störbehafteten Basisbandsignal sowie Anordnung.

(57) Zur Wiedergewinnung von Binärinformationen aus einem störbehafteten zusammengesetzten Basisbandsignal, insbesondere einem D2-MAC-Signal, wird aus einer Spitzenwertdetektion (SD1, SD2) ein Regelsignal für einen Regelverstärker (V) abgeleitet. Signalanteile, die außerhalb dieses Datenbursts liegen, werden bei der Regelung ausgetastet. Das Ausgangssignal des Regelverstärkers (V) wird einem Duobinär-Binärdecoder (DB) zugeführt, dessen Entscheiderschwellen in Abhängigkeit der positiven und negativen Spitzenwerte des Datenbursts gesteuert werden.

Durch die Maßnahmen der Erfindung arbeitet der Duobinär-Binärdecoder (DB) unabhängig von der Signalamplitude des zu decodierenden Signals immer optimal.

FIG. 2

## Verfahren zum Wiedergewinnen von Binärinformationen aus einem störbehafteten Basisbandsignal sowie Anordnung

Die Erfindung geht aus von einem Verfahren gemäß dem Oberbegriff des Patentanspruchs 1. Ein solches Verfahren, bzw. eine auf einem solchen Verfahren basierende Anordnung, ist Gegenstand der deutschen Patentanmeldung P 37 29 235.8.

Bei der Anordnung gemäß der DE P 37 29 235.8 wird der D2-Anteil in einem D2-MAC-Signal mittels eines Duobinärdecoders wiedergewonnen. Aufgabe der Erfindung ist es, ausgehend vom Oberbegriff des Patentanspruchs 1, ein Verfahren anzugeben, welches unabhängig von der Signalamplitude des zu decodierenden Signals eine optimale Decodierung durch einen Duobinärdecoder ermöglicht. Außerdem soll eine Anordnung zum Durchführen dieses Verfahrens aufgezeigt werden. Diese Aufgabe wird bezüglich des Verfahrens durch die Merkmale des Patentanspruchs 1 und bezüglich der Anordnung durch die Merkmale des Patentanspruchs 4 gelöst. Die Patentansprüche 2 und 3 zeigen Weiterbildungen des Verfahrens und der Patentanspruch 5 zeigt eine Weiterbildung der Anordnung auf.

Die Erfindung geht von der Erkenntnis aus, daß feste Schwellwerte für einen Duobinärdecoder, insbesondere bei Schwankungen der Amplitude des zu decodierenden Signals, nicht optimal sind. Durch die Maßnahmen der Erfindung erfolgt die Entscheidung des Duobinärdecoders immer optimal und unabhängig von der Signalamplitude des zu decodierenden Signals. Durch die Steuerung der Entscheider-Schwellen des Duobinärdecoders ist eine Decodierung in einem sehr großen Eingangspegelbereich möglich.

Die Erfindung wird nun anhand eines Ausführungsbeispieles näher erläutert. Es zeigen

Fig. 1 eine schematische Darstellung eines D2-MAC-Signals während einer Zeilenperiode und

Fig. 2 ein Prinzipschaltbild einer Anordnung zum Durchführen des Verfahrens.

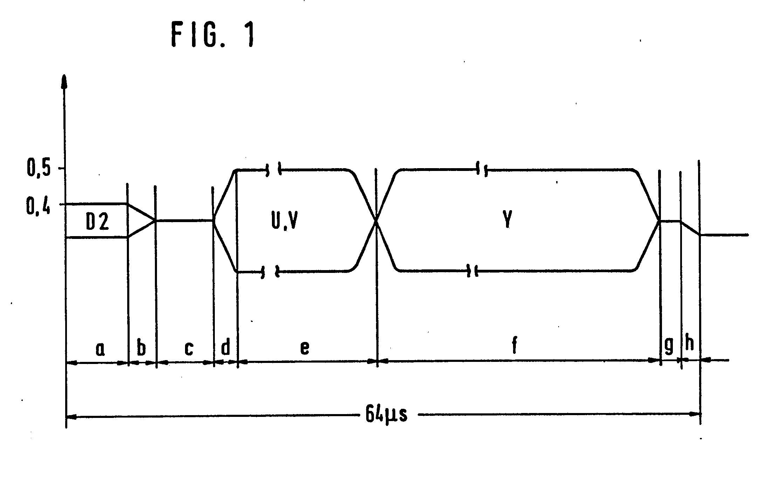

Das zusammengesetzte Basisbandsignal, aus dem die Binärinformation wiedergewonnen werden soll, sei beispielsweise ein D2-MAC/Paket-Signal, welches als Übertragungssignal für Fernsehsatelliten vorgesehen ist. Den Aufbau dieses D2-MAC/Paket-Signals für eine Zeilenperiode zeigt Fig. 1. Während des Zeitabschnitts a werden duobinär codierte digitale Signale übertragen, welche die Zeilensynchronisierung, Tonkanäle und weitere Daten beinhalten. Der Zeitabschnitt b ist ein Übergangszeitabschnitt zum Ausschwingen des Datenbursts, an den sich der Zeitabschnitt c anschließt. Dieser Zeitabschnitt c wird als Klemmperiode bezeichnet. Die Klemmperiode enthält einen analogen Nullreferenzwert der Farbdifferenzsignale. Auf diesen Bezugswert erfolgt die Regelung des Datenbursts - D2-Anteil - beim Verfahren nach der Erfindung. Der Zeitabschnitt d stellt wieder einen Übergangszeitabschnitt dar, an den sich der Zeitabschnitt e anschließt. Während des Zeitabschnitts e werden zeilenweise abwechselnd die komprimierten Farbdifferenzsignale U und V übertragen. Die Leuchtdichteinformation Y wird im Zeitabschnitt f übertragen mit Übergang zum Klemmpegel - Zeitabschnitt g - am Ende der Leuchtdichteinformation. Vom Klemmpegel erfolgt während des Zeitabschnitts h der Übergang zum Datenburst.

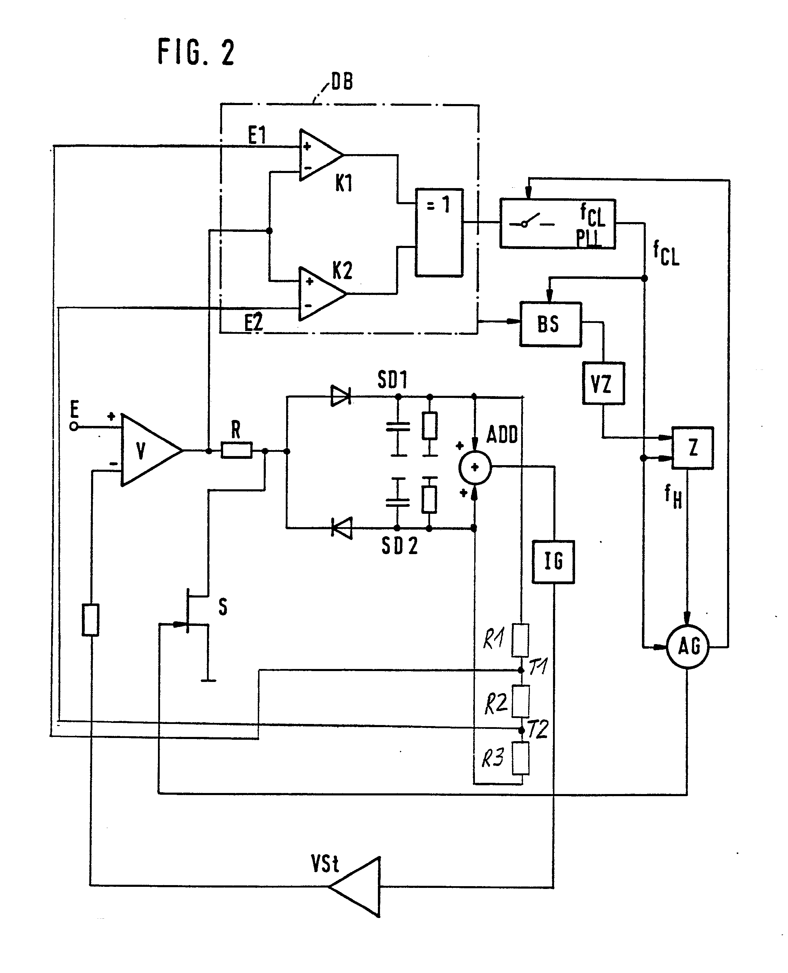

In Fig. 2 ist eine Anordnung zum Durchführen des erfindungsgemäßen Verfahrens dargestellt. Dem Eingang E des Regelverstärkers V wird das empfangene verrauschte D2-MAC-Signal mit überlagerter Trägerenergieverwischung zugeführt. Die Trägerenergieverwischung wird senderseitig beispielsweise durch ein Dreiecsignal mit einer Periodendauer synchron zum Bildsignal erreicht (vgl. Rundfunktechnische Mitteilungen, Jahrgang 29 (1985) Heft 5, Seite 238). Der Ausgang des Regelverstärkers V ist mit Spitzenwertdetektoren SD1 und SD2 jeweils für positive und negative Amplitudenwerte des D2-MAC-Signals verbunden. Die Ausgangssignale der Spitzenwertdetektoren SD1 und SD2 werden über einen Addierer ADD derart miteinander verknüpft, daß am Ausgang des Addierers der Mittelwert zwischen positivem und negativem Amplituden-Spitzenwert des Datenbursts erscheint. Die Ausgänge der beiden Spitzenwertdetektoren SD1 und SD2 sind außerdem durch eine aus der Serienschaltung dreier Widerstände bestehenden Spannungsteilerkette R1, R2, R3 verbunden. Die Teilerabgreifpunkte, d.h. die beiden Verbindungen zwischen den Widerständen R1 und R2, bzw. R2 und R3 sind mit T1 und T2 bezeichnet. Dem Addierer ADD ist ein Integrator IG und gegebenenfalls ein Verstärker VSt nachgeschaltet. Die Zeitkonstante dieses Integrators IG ist so gewählt, daß die Umladung des im Integrator IG befindlichen kapazitiven Elemente der Trägerverwischung folgen kann, d.h. beispielsweise $\tau < 20$ ms. Das Ausgangssignal des Integrators, bzw. ein dazu proportionales Signal, wird auf den Gegenkopplungseingang des Regelverstärkers V geführt. An den Ausgang des Regelverstärkers V ist ein Schalter 5 angeschlossen, über den der Regelverstärkerausgang mit einem festen Bezugspotential, z.B. mit Massepotential, verbindbar ist.

Dieser Schalter 5 kann beispielsweise ein Feldeffekttransistor sein, der mittels eines steuerbaren Austastimpulsgenerators AG ein- und ausschaltbar ist. Der Schalter 5 zur Unterbrechung der Regelschleife kann natürlich auch an anderer Stelle angeordnet sein, beispielsweise als Längsschalter zwischen Ausgang und Gegenkopplungseingang des Regelverstärkers. Während der Dauer des D2-Anteils oder etwas kürzer, ca. 10 $\mu$s, wird dieser Schalter 5 gesperrt ansonsten leitend gesteuert.

Die Regelschleife wird also während des Auftretens des MAC-Anteils unterbrochen und der Eingang der Spitzenwertdetektoren SD1 und SD2 auf Massepotential geschaltet. Während der Austastung des MAC-Anteils wird das Regelsignal durch die Wirkung des Integrators IG annähernd auf dem vorherigen Wert gehalten. Durch diese Maßnahme kann der ebenfalls an den Ausgang des Regelverstärkers RV angeschlossene, beispielsweise aus Rundfunktechnische Mitteilungen, Jahrgang 29 (1985) Heft 5, Seite 232, bekannte Duobinär-Binärwandler DB optimal arbeiten. Durch die Austastung des MAC-Anteils und Regelung auf den Mittelwert des positiven und negativen Spitzenwertes des D2-Signals liegt das D2-Signal an den Eingängen der beiden Komparatoren K1 und K2 immer symmetrisch zu den Entscheiderschwellen E1 und E2. Der Teilerabgreifpunkt T1 ist mit dem Schwellwerteingang E1 des Komparators K1 und der Teilerabgreifpunkt T2 mit dem Schwellwerteingang E2 des Komparators K2 verbunden. Durch diese Maßnahme arbeitet der Duobinär-Binärwandler DB je nach der Signalamplitude des zu decodierenden Signals mit variablen Schwellwerten. Mit dieser an die Signalamplitude angepaßten Schwellwertentscheidung (positive und negative Spitzenwerte) ist die Anordnung gemäß Fig. 2 für einen größeren Eingangspegelbereich verwendbar als die Anordnung gemäß P 37 29 235.8. Die Ausgangssignale der beiden Komparatoren sind über ein EXOR-Gatter miteinander verknüpft. An dessen Ausgang erscheinen die wiedergewonnenen Binärinformationen unverfälscht. MAC-Anteile, deren Amplitude größer ist als die Amplitude des D2-Anteils führen nicht zu einer unsymmetrischen Lage des Datenbursts gegenüber den Entscheiderschwellen und einer damit verbundenen Verschlechterung der Bitfehlerrate.

Die Nachsteuerung des Austastimpulsgenerators AG erfolgt so, daß die Signalaustastung auf den Datenburst synchronisiert wird. Dazu sind eine PLL-Phasenregelschleife am Ausgang des Duobinär-Binärwandlers DB vorgesehen und ein Bildsynchronwortdetektor BS.

Die Phasenregelschleife PLL regeneriert den Takt $f_{cl}$ = 10,125 MHz des binär gewandelten D2-Signals. Der Bildsynchronwortdetektor BS detektiert das 64 bit Bildsynchronwort in Zeile 625. Sein Ausgangsimpuls wird in der Verzögerungsstufe VZ bis zum Beginn der Zeile 1 verzögert. Der verzögerte Puls startet den Zähler Z mit einem Ausgangssignal $f_H$, der den Takt $f_{cl}$ durch 648 teilt und somit ein zeilenfrequentes und mit dem Beginn jeder Zeile synchrones Signal liefert, das den Austastimpulsgenerator AG steuert.

Der Austastimpuls schaltet den Schalter S so, daß der MAC-Anteil am Eingang von SD1 und SD2 ausgetastet wird und nur der D2-Anteil oder ein Teil des D2-Anteils an SD1, SD2 anliegt (Zeitabschnitt a Figur 1). Der Widerstand R entkoppelt den Ausgang des Regelverstärkers RV vom Eingang der Spitzenwertdetektoren SD1 und SD2 und verhindert einen Kurzschluß des Ausgangs des Regelverstärkers RV durch den Schalter S. Außerdem tastet der Austastimpuls die Phasenregelschleife PLL so, daß sie nur nachsynchronisiert wird, wenn der Datenburst an ihrem Eingang anliegt.

Nach Anlegen eines D2-MAC-Signals erfolgt die Synchronisierung folgendermaßen:
Der PLL-Taktgenerator - PLL mit einem spannungsgesteuerten Quarzoszillator VCXO - arbeitet zunächst unsynchronisiert und erzeugt ein nichtsynchrones, zeilenfrequentes Austastsignal

$$f_H = \frac{f_{cl}}{648}.$$

Mit diesem Signal wird das am Eingang der Spitzenwertdetektoren SD1 und SD2 anliegende D2-MAC-Signal getastet. Aufgrund der Differenzfrequenz zwischen dem spannungsgesteuerten Quarzoszillator VCXO der PLL und der Taktfrequenz des empfangenen D2-Signalanteiles driftet die Austastung des MAC-Signals gegenüber dem D2-MAC-Signal bis Austastsignal und MAC-Anteil zeitlich zusammenfallen.

Da die Frequenzdifferenz sehr gering ist, z.B. ca. ± 500 Hz bei $f_{cl}$ = 10,125 MHz hat die Regelschleife der Hüllkurvenregelung - Spitzenwertdetektoren SD1 und SD2, Integrator IG, Verstärker Vst, Regelverstärker RV - genügend Zeit, einzuschwingen und das D2-Signal zu zentrieren. Nun kann der Bildsynchronwortdetektor BS das Bildsynchronwort erkennen und den Austastimpulsgenerator AG synchronisieren. Gleichzeitig wird das synchrone Austastsignal der PLL zugeführt und verbindet diese während des Zeitabschnitts ≤ a (Figur 1) mit dem am Ausgang des Duobinär-Binärwandlers DB anstehenden Binärsignals, das die PLL frequenz- und phasenmäßig synchronisiert.

## Ansprüche

1. Verfahren zum Wiedergewinnen von Binärinformationen aus einem störbehafteten Basisbandsignal, welches aus einem ursprünglich zu seiner Grundlinie symmetrischen Datenburst und einem weiteren Signalanteil zusammengesetzt ist, dessen Amplitude größere unsymmetrische Werte annehmen kann als der Datenburst, wobei eine Spitzenwertdetektion des Datenbursts bezüglich positiver
und negativer Amplitudenwerte vorgenommen wird,
wobei aus der Spitzenwertdetektion ein Regelsignal
abgeleitet wird, mittels dessen der Mittelwert zwischen positivem und negativem Amplitudenspitzenwert des Datenbursts auf einen vorgegebenen Bezugswert geregelt wird, und wobei das Regelsignal
für die Zeiten, in denen Amplitudenwerte auftreten,
die höher sind als die Amplitudenwerte des Datenbursts, annähernd auf dem vorherigen Wert gehalten wird, dadurch gekennzeichnet, daß aus den
detektierten positiven und negativen Spitzenwerten
des Datenbursts die Entscheiderschwellen für einen Duobinärdecoder abgeleitet werden.

2. Verfahren nach Anspruch 1, insbesondere
zum Wiedergewinnen von Binärinformationen aus
einem trägerverwischten und verrauschten D2-
MAC-Signal, dadurch gekennzeichnet, daß vor der
Spitzenwertdetektion eine Signalaustastung zumindest für die Dauer des MAC-Anteils vorgenommen
wird.

3. Verfahren nach Anspruch 2, dadurch gekennzeichnet, daß die Signalaustastung auf die Datenburstauswertung synchronisiert wird.

4. Anordnung zum Durchführen des Verfahrens
nach einem der Ansprüche 1 bis 3, bestehend aus
- einem Regelverstärker (V), dessen Verstärkungseingang das störbehaftete Basisbandsignal / trägerverwischte und verrauschte D2-MAC-Signal zuführbar ist,
- einem Duobinärdecoder (DB) am Ausgang des
Regelverstärkers (V),
- Spitzenwertdetektoren (SD1, SD2) für jeweils positive und negative Signalanteile des Basisbandsignals / D2-MAC-Signals am Ausgang des Regelverstärkers (V),
- einem Addierer (ADD) zur Verknüpfung der Spitzenwertdetektorausgangssignale,
- einem Integrator (IG) am Ausgang des Addierers
(ADD),
- einer Verbindungsleitung vom Ausgang des Integrators (IG) zum Gegenkopplungseingang des Regelverstärkers (V),
- einem Schalter (S) zur Unterbrechung der Regelschleife des Regelverstärkers (V) für die Zeit
des Auftretens des weiteren Signalanteils / MAC-
Anteils,
gekennzeichnet durch
- eine Spannungsteilerkette (R1, R2, R3), deren
Endpunkte mit den Ausgängen der beiden Spitzenwertdetektoren (SD1, SD2) und deren Teilerabgreifpunkte (T1, T2) jeweils mit einem Entscheiderschwelleneingang (E1, E2) des Duobinärdecoders
(DB) verbunden sind.

5. Anordnung nach Anspruch 4, gekennzeichnet durch
- einen steuerbaren Austastimpulsgenerator (AG) zur Ein-/Ausschaltung des Schalters (S),
- einer Phasenregelschleife (PLL) zur Taktrückgewinnung am Ausgang des Duobinär-Binärwandlers
(DB),
- einen Bildsynchronwortdetektor (BS) am Ausgang
des Duobinär-Binärwandlers (DB),
- eine Verzögerungsstufe (VZ) am Ausgang des
Bildsynchronwortdetektors (BS) zur Verzögerung
des Ausgangsimpulses des Bildsynchronwortdetektors (BS),
- einen Zähler (Z) zur Zeilenfrequenzableitung ($f_H$),
welcher zur Steuerung des Austastimpulsgenerators (AG) vorgesehen ist.

FIG. 1

BK88188

FIG. 2

EP 0 369 159 A2

BK 88/88